Europäisches Patentamt

(19) European Patent Office

Office européen des brevets

(11) Publication number: **0 005 330**
**B1**

(12) **EUROPEAN PATENT SPECIFICATION**

(45) Date of publication of patent specification: **31.03.82**

(21) Application number: **79300643.8**

(22) Date of filing: **19.04.79**

(51) Int. Cl.³: **H 05 B 37/03, B 60 Q 11/00**

(54) Lighting system.

| | |
|---|---|
| (30) Priority: **04.05.78 GB 1769278** | (73) Proprietor: **LUCAS INDUSTRIES LIMITED**<br>**Great King Street**<br>**Birmingham, B19 2XF (GB)** |
| (43) Date of publication of application:<br>**14.11.79 Bulletin 79/23** | (72) Inventor: **Nicol, Thomas**<br>**28, Spring Road**<br>**Lichfield, Staffordshire (GB)** |
| (45) Publication of the grant of the patent:<br>**31.03.82 Bulletin 82/13** | |
| (84) Designated Contracting States:<br>**BE DE FR GB IT NL** | (74) Representative: **Prutton, Roger et al,**<br>**MARKS & CLERK Alpha Tower A.T.V.Centre**<br>**Birmingham B1 1TT (GB)** |
| (56) References cited:<br>**DE - A - 1 613 909**<br>**FR - A - 2 367 401** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Lighting system

The present invention relates to a lighting system including a plurality of parallel connected flasher lamps in which an indication is provided in the event of lamp failure.

In one known system comprising a number of lamps connected in parallel, the current flowing in the lamps is detected by a bridge circuit comprising a first resistor connected in series with the lamps, and a second and third resistor connected in series with each other and in parallel with the first resistor and the lamps. The bridge circuit controls a pilot lamp which provides an indication when one of the lamps has failed. This system operates satisfactorily with a constant supply voltage but there is a danger of malfunction if the supply voltage fluctuates as the resistance of the lamps varies with supply voltage.

For example, at a low supply voltage, there is a danger that no indication will be provided when one of the lamps fails whilst at a high supply voltage there is a danger that an indication of failure will be provided when none of the lamps has failed.

In DE—A—1613909 tnere is described a system in which lamp failure is detected by a bridge circuit. One arm of the bridge circuit is a diode and it is stated that the diode compensates for variations in the supply voltage as it behaves like a resistor, the resistance of which varies with voltage. In this system, correct lamp operation is indicated by energization of a pilot lamp and this may not provide adequate warning of lamp failure in the case of flasher lamps.

It is accordingly an object of the present invention to provide a new or improved lighting system in which an indication is provided when one of the lamps has failed and in which the above mentioned disadvantages are overcome or reduced.

According to the present invention there is provided a lighting system having a plurality of parallel connected flasher lamps characterised in that the system includes a bridge circuit for detecting the current flowing in the lamps which includes a voltage bias means to compensate for the variation of the resistance of the lamps with supply voltage, and means for driving the lamps which includes a timing circuit, the timing action of the timing circuit being controlled by the bridge circuit so that the frequency of flashing is varied in the event of lamp failure.

The voltage bias means, which may be provided cheaply, reduces the danger of no indication being provided when one of the lamps fails at a low voltage or of an indication of failure when none of the lamps has failed at a high supply voltage, and varying the flashing· frequency in the event of lamp failure provides a satisfactory warning of lamp failure.

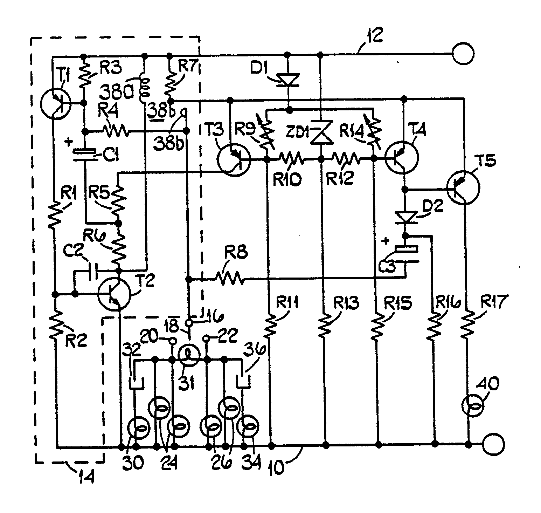

The present invention will now be described in more detail by way of example with reference to the accompanying drawing which is a circuit diagram of a vehicle flasher lamp system embodying the present invention.

Referring now to the drawing, the vehicle flasher lamp system comprises negative and positive supply lines 10, 12 and a drive means in the form of an astable multivibrator, indicated by a dashed line 14, connected between the lines 10, 12 and also connected to the common terminal 16 of a direction indicator switch 18. The indicator switch 18 further comprises a left hand terminal 20 and a right hand terminal 22, a pair of left hand vehicle flasher lamps 24 being connected in parallel between the terminal 20 and line 10 and a pair of right hand vehicle flasher lamps 26 being connected in parallel between the terminal 22 and line 10. A first pilot lamp 31 is connected between terminals 20 and 22.

The system shown in the drawing is intended for use with a vehicle and detachable trailer combination and includes left and right hand trailer flasher lamp 30, 34 which may be connected to the terminals 20 and 22 through sockets 32, 36.

The multivibrator 14 comprises a p-n-p transistor T1, the emitter of which is connected to line 12 and the collector of which is connected through series connected resistors R1 and R2 to the line 10. The base of transistor T1 is connected through a resistor R3 to the line 12 and through a resistor R4 to the terminal 16. The junction of resistors R1 and R2 is connected to the base of an n-p-n transistor T2, the emitter of which is connected to line 10 and the collector of which is connected through the coil 38a of a relay 38 to the line 12. The terminal 16 is connected through the normally open contacts 38b of relay 38 and a resistor R7 to the line 12. The collector of the transistor T2 is connected to one end of a potential divider chain comprising a pair of resistors R5 and R6 connected in series, and the other end of the potential divider chain is connected to the collector of a p-n-p transistor T3. The junction of resistors R5 and R6 is connected through a capacitor C1 to the base of transistor T1 and the collector of transistor T2 is connected to its base by a capacitor C2.

The flasher system further includes a first and second bridge circuit. The first bridge circuit includes the resistor R7 and the transistor T3 and further includes a diode D1, the anode of which is connected to the line 12 and the cathode of which is connected through a preset resistor R9 and a fixed resistor R11, connected in series, to the line 10. The junction of resistors R9 and R11 is connected to the base of transistor T3 and the emitter of transistor T3 is connected to the junction of resistor R7 and the contacts 38b. The junction of resistors R9 and R11 is also connected through a resistor R10 and a resistor R13 connected in series to the line 10.

The first bridge circuit also has a zener diode ZD1 having its anode connected to the junction of resistor R10 and R13 and its cathode connected to line 12.

The second bridge circuit includes the diode D1, the zener diode ZD1 and the resistor R13 and further comprises a preset resistor R14 having one end connected to the cathode of the diode D1 and the other end connected through a resistor R15 to the line 10. The junction of resistors R14 and R15 is connected through a resistor R12 to the anode of zener diode ZD1. The junction of resistor R14 and R15 is also connected to the base of a p-n-p transistor T4, the emitter of which is connected to the junction of resistor R7 and contacts 38b.

The system further includes a p-n-p transistor T5, the emitter of which is connected to the emitter of transistor T4, and the collector of which is connected through a resistor R17 and a second pilot lamp 40, connected in series to the line 10. The base of transistor T5 is connected to the collector of transistor T4 and also to the anode of diode D2. The cathode of diode D2 is connected through a resistor R16 to the line 10 and through a capacitor C3 and a resistor R8, connected in series, to the terminal 16.

In the first bridge circuit, the transistor T3 compares the voltage drop across resistor R7, which depends on the current flowing in the flasher lamps, with the voltage drop across the resistor R9 and the value of the resistor R9 is adjusted so that the transistor T3 is conductive at all times except when two or more lamps are working and energised.

The zener diode ZD1 and resistors R10 and R13 are provided to compensate for the non-linear resistance characteristics of the flashing lamp as will now be explained. In the range of normal working voltage the voltage current curve for the flashing lamps is approximately a straight line originating at a voltage $-V_0$. In a 12 volt system, $V_0$ has a value of approximately 10 volts, and, in a 24 volt system, $V_0$ has a value of approximately $23\frac{1}{2}$ volts. In order to compensate for this non-linear characteristic, the resistor R10, zener diode ZD1 and resistor R13 are arranged as a voltage bias means to simulate one end of the resistor R11 being connected to a voltage $-V_0$ with reference to the line 10. If R11 were connected to $-V_0$, then the current in resistor R9, $i_{R9}$, would be given approximately by:

$$i_{R9} = (V_s + V_0)/R11$$

where $V_s$ is the supply voltage.

However, in the circuit shown, the current $i_{R9}$ is given approximately by:

$$i_{R9} = \frac{V_s}{R11} + \frac{V_z}{R10}$$

where $V_z$ is the breakdown voltage of the zener diode ZD1.

Thus in order to compensate for the non-linear resistance characteristics of the flasher lamps, it is only necessary to arrange that:

$$\frac{V_z}{R10} = \frac{V_0}{R11}$$

In the case of the second bridge circuit, the resistor R14 is adjusted so that the transistor T4 is conductive at all times except when three lamps are working and energised. In order to compensate for the non-linear resistance characteristics of the flasher lamps, the value of the resistors R12 and R15 are chosen so that:

$$\frac{V_z}{R12} = \frac{V_0}{R15}$$

The operation of the system will now be described firstly with trailer lamps 30 and 34 disconnected.

If either the left hand or right hand vehicle flasher lamps 24 and 26 are connected to the multivibrator 14 through the switch 18 and both lamps are working, then during the on periods when the lamps are energised, both transistors T1 and T2 will be on, the coil 38a will be energised and the contacts 38b will be closed. Also, as explained above, the transistor T3 will be off. The capacitor C1 will be charged with its positive plate held at a voltage which is less than the supply line 12 by an amount $V_{be(T1)}$, the base-emitter saturation voltage drop of transistor T1, and with its negative plate falling towards a voltage which is greater than the supply line 10 by an amount $V_{ce(T2)}$, the collector-emitter saturation drop of transistor T2, until the base current of transistor T1 falls below the level required to keep this transistor turned on. At this stage transistor T1 will turn off, thereby turning off transistor T2, de-energising coil 38a, opening contacts 38b, extinguishing the lamps, and the off period will commence and, as explained above, when the lamps are extinguished, the transistor T3 will be conductive. The negative plate of capacitor C1 will now be connected to the positive supply line 12 through resistor R5 and transistor T3 as well as through resistor R6 and coil 38a with the result that, at the beginning of the off period, the positive plate of capacitor C1 will be at a voltage slightly greater than the voltage of the positive supply line 12 thereby holding transistor T1 off. However, during the off period, capacitor C1 will discharge with the voltage of the positive plate of capacitor C1 falling towards the voltage

$$V_s \cdot \frac{R3}{(R3 + R4)}$$

below the supply line 12, where $V_s$ is the supply voltage and R3 and R4 are the resistance values of resistors R3 and R4. When the voltage of the positive plate of capacitor C1 falls below the voltage of the supply line 12 by an amount $V_{be(T1)}$, the transistor T1 and hence transistor T2 will turn on and the on period will commence again and the cycle will be repeated.

If instead, one of the sets of lamps 24 and 26 is connected to the multivibrator 14 through switch 18 and one of the lamps is not working, the system will operate as follows. During the on period, both transistors T1 and T2 will be on and the capacitor C1 will charge with the positive plate again held at a voltage which is less than the voltage of the supply line 12 by an amount $V_{be(T1)}$. However, as explained above, transistor T3 will be conductive and so the resistors R5 and R6 will function as a potential divider and the negative plate of the capacitor C1 will fall towards a voltage which is greater than the supply line 10 by an amount approximately equal to

$$V_s \cdot \frac{R6}{(R5 + R6)}.$$

As a result, the base current of transistor T1 will fall below the level required to keep this transistor turned on more quickly than in the case when both lamps are operating and so the on period will be shorter and the capacitor C1 will be charged to a lower voltage. At the beginning of the off period, the negative plate of capacitor C1 will again be connected to the positive line 12 through resistor R5 and transistor T3 as well as through resistor R6 and coil 38a, the positive plate of capacitor C1 will be at a voltage greater than the supply line 12, though by a smaller amount than when both lamps are working, and it will then fall towards the voltage

$$V_s \cdot \frac{R3}{R_3 + R4}$$

below supply line 12 as before.

However, as capacitor C1 was charged to a lower voltage during the on period, the positive plate of capacitor C1 will fall below the voltage of the supply line 12 more quickly than is the case when both lamps are working and so the off period will be shorter.

Thus, when one of the lamps 24 or 26 is not working, the flashing frequency will increase thereby providing an indication to the driver of a vehicle in which the system is installed that one of the lamps has failed, since the pilot lamp 31 will flash with the flasher lamps.

The frequency of flashing will be mainly determined by the resistance values of resistor R3, R4, R5, R6 and the capacitance value of capacitor C1. Thus, these elements form part of the timing circuit of the multivibrator 14 and, conveniently, their values are chosen so that the frequency of flashing approximately doubles when one lamp has failed.

Capacitor C2 performs the dual purpose of limiting the voltage which appears across the collector-emitter junction of transistor T2 at the beginning of the off period, and also provides a direct path for positive going transient voltages which may appear on supply line 12 such that both transistors T1 and T2 turn on. When on, the collector-emitter voltage of these transistors is held at a low value which protects them during the positive voltage transient.

The operation of the system will now be described with the trailer lamps 30 and 34 connected to switch 18 through sockets 32 and 36.

If either the left hand or right hand lamps are connected to the multivibrator 14 through switch 18 and all three lamps connected are working, then during each on period the transistor T4 will be non-conductive as explained above. Consequently, transistor T5 will be rendered conductive and pilot lamp 40 will be energised. During each off period, the transistor T4 will be conductive, thereby rendering transistors T5 non-conductive and preventing energisation of pilot lamp 40. Thus, with all three lamps working, the pilot lamp 40 will flash with the flasher lamps thereby providing an indication that all three lamps including the trailer lamp are working.

However, if one of the flasher lamps is not working, then the transistor T4 will remain conductive during the on periods, thereby preventing energisation of the pilot lamp 40.

The function of capacitor C3 will now be explained. When the flasher lamps are first energised at the beginning of each on period, the current rises rapidly to a high value for approximately 50 milliseconds. In the absence of capacitor C3, and with only two lamps working, this could result in transistor T5 being rendered conductive for approximately 50 milliseconds at the beginning of each on period and pilot lamp 40 providing a false indication that all three flasher lamps are working. However capacitor C3 is charged during each off period through transistor T4 and the flasher lamps, and the value of capacitor C3 and resistor R16 are chosen so as to hold transistor T5 non-conductive for approximately 50 milliseconds at the beginning of each on period.

The system shown may be modified by providing a switch to connect all the lamps 24, 26, 30 and 34 to the astable multivibrator 14 to provide a hazard warning, and then the lamps will flash at the normal flashing frequency if two or more lamps are working, and the pilot lamp 40 will flash if three or more lamps are working.

## Claims

1. A lighting system having a plurality of parallel connected flasher lamps (24, 26, 30, 34) characterised in that the system includes a bridge circuit (R7, R9, R10, R11) for detecting the current flowing in the lamps which includes a voltage bias means (ZD1, R13) to compensate for the variation of the resistance of the lamps with supply voltage, and means (14) for driving the lamps which includes a timing circuit (R3, R4, R5, R6, C1), the timing action of the timing circuit being controlled by the bridge circuit so that the frequency of flashing is varied in the event of lamp failure.

2. A lighting system as claimed in Claim 1 characterised in that the timing circuit includes a potential divider chain (R5, R6), and a resistor-capacitor circuit (R3, C1), the resistor-capacitor circuit being connected to an intermediate position of the potential divider chain and the potential dividing action of the dividing chain being controlled by the bridge circuit.

3. A lighting system as claimed in Claim 2 characterised in that the bridge circuit includes a first resistor (R7) connected in series with the lamps, second (R9) and third (R11) resistors connected in series with each other and in parallel with the lamps and the first resistor, a zener diode (ZD1) and a fourth resistor (R13) connected in series and forming the voltage bias means and being connected in parallel with the second and third resistors, a fifth resistor (R10) connected between the junction of the second and third resistors and the junction of the fourth resistor and the zener diode, and a transistor (T3) having its base-emitter path connected between the junctions of the first resistor and the lamps and the junction of the second and third resistors and having its collector connected to one end of the potential divider chain.

4. A lighting system as claimed in any one of the preceding claims characterised in that the lamps comprise a set of vehicle flasher lamps (24, 26) and a set of trailer flasher lamps (30, 34) and in that the system includes a second bridge circuit (R7, R14, R15) for detecting current flowing in the trailer lamps, the second bridge circuit being used to indicate operation of the trailer lamps.

## Revendications

1. Un dispositif d'éclairage possédant plusieurs lampes productrices d'éclairs, ou clignotantes, (24, 26, 30, 34) connectées en parallèle, caractérisé en ce que le dispositif comporte un circuit en pont (R7, R9, R10, R11) destiné à mesurer le courant passant dans les lampes qui comporte un moyen de polarisation de tension (ZD1, R13) servant à compenser les variations de la résistance des lampes avec la tension d'alimentation, et un moyen (14) destiné à exciter les lampes qui comporte un circuit de minuterie (R3, R4, R5, R6, Cl), dont l'action de minuterie est commandée par le circuit en pont de façon que la fréquence de production d'éclairs, ou de clignotement, varie en cas de défaillance de lampe.

2. Un dispositif d'éclairage tel que revendiqué dans la revendication 1, caractérisé en ce que le circuit de minuterie comporte une chaîne potentiométrique (R5, R6), et un circuit résistance-condensateur (R3, C1), le circuit résistance-condensateur étant connecté à une position intermédiaire de la chaîne potentiométrique et l'action de division de potentiel de la chaîne potentiométrique étant commandée par le circuit en pont.

3. Un dispositif d'éclairage tel que revendiqué dans la revendication 2, caractérisé en ce que le circuit en pont comporte une première résistance (R7) connectée en série avec les lampes, une deuxième résistance (R9) et une troisième résistance (R11) connectées en série l'une avec l'autre et en parallèle avec les lampes et la première résistance, und diode Zener (ZD1) et une quatrième résistance (R13) connectées en série, qui forment le moyen de polarisation de tension et sont connectées en parallèle avec la deuxième et la troisième résistance, une cinquième résistance (R10) connectée entre le point de jonction de la deuxième et de la troisième résistance et le point de jonction de la quatrième résistance et de la diode Zener, et un transistor (T3) dont le trajet base-émetteur est connecté entre les points de jonction de la première résistance et des lampes et le point de jonction de la deuxième et de la troisième résistance et dont le collecteur est connecté à une extrémité de la chaîne potentiométrique.

4. Un dispositif d'éclairage tel que revendiqué dans l'une quelconque des revendications précédentes, caractérisé en ce que les lampes comprennent un ensemble de lampes (24, 26) de clignotant de véhicule et un ensemble de lampes (30, 34) de clignotant de remorque et en ce que le dispositif comporte un deuxième circuit en pont (R7, R14, R15) destiné à mesurer le courant passant dans les lampes de la remorque, le deuxième circuit en pont étant utilisé pour indiquer le fonctionnement des lampes de la remorque.

## Patentansprüche

1. Beleuchtungsanlage mit mehreren parallel verbundenen Blitzlampen (24, 26, 30, 34), dadurch gekennzeichnet, daß die Anlage aufweist eine Brückenschaltung (R7, R9, R10, R11) zum Erfassen des in den Lampen fließenden Stromes, die eine Vorspannungseinrichtung (ZD1, R13) zur Kompensation einer Änderung des Widerstandswertes der Lampen mit der Versorgungsspannung hat, und eine Einrichtung (14) zum Ansteuern der Lampen, die eine

9

10

Zeitschaltung (R3, R4, R5, R6, C1) hat, deren Zeitsteuerwirkung durch die Brückenschaltung derart gesteuert ist, daß sich die Frequenz des Blitzens bei dem Ereignis eines Lampen-Ausfalles verändert.

2. Beleuchtungsanlage nach Anspruch 1, dadurch gekennzeichnet, daß die Zeitschaltung ein Potentialteilerkette (R5, R6) und ein RC—Glied (R3, C1) aufweist, wobei das RC—Glied mit einem Zwischenabgriff der Potentialteilerkette verbunden und das Potentialteilen der Potentialteilerkette durch die Brückenschaltung gesteuert ist.

3. Beleuchtungsanlage nach Anspruch 2, dadurch gekennzeichnet, daß die Brückenschaltung aufweist einen ersten Widerstand (R7), der in Reihe mit den Lampen angeschlossen ist, einen zweiten sowie einen dritten Widerstand (R9, R11), die in Reihe zueinander und parallel mit den Lampen und dem ersten Widerstand angeordnet sind, eine Zener-Diode (ZD1) sowie einen vierten Widerstand (R13), die in Reihe angeordnet sind und die Vorspannungseinrichtung bilden sowie parallel zum zweiten und dritten Widerstand liegen, einen fünften Widerstand (R10), der zwischen dem Knotenpunkt des zweiten Widerstandes mit dem dritten Widerstand und dem Knotenpunkt des vierten Widerstandes mit der Zener-Diode angeschlossen ist, und einen Transistor (T3), dessen Basis-Emitter-Strecke zwischen den Knotenpunkten des ersten Widerstandes mit den Lampen und dem Knotenpunkt des zweiten Widerstandes mit dem dritten Widerstand liegt, und dessen Kollektor an ein Ende der Potentialteilerkette angeschlossen ist.

4. Beleuchtungsanlage nach einem der vorangehenden Ansprüche, dadurch gekennzeichnet, daß die Lampen einen Satz von Fahrzeug-Blitzlampen (24, 26) und einen Satz von Anhänger-Blitzlampen (30, 34) aufweisen, und daß die Anlage eine zweite Brückenschaltung (R7, R14, R15) zum Erfassen eines in den Anhängerlampen fließenden Stromes hat, wobei die zweite Brückenschaltung zum Anzeigen eines Betriebs der Anhängerlampen dient.